## Europäisches Patentamt

## European Patent Office

## Office européen des brevets

(11) Veröffentlichungsnummer: **0 001 807**
**B1**

(12) **EUROPÄISCHE PATENTSCHRIFT**

(45) Veröffentlichungstag der Patentschrift: **29.07.81**

(21) Anmeldenummer: **78101231.5**

(22) Anmeldetag: **26.10.78**

(51) Int. Cl.³: **C 08 J 9/14,** C 08 L 23/04, E 04 F 13/00

(54) Geschäumte Polyolefinfolie, Verfahren zu ihrer Herstellung und Wandbekleidung aus geschäumter Polyolefinfolie.

<table>
<tr><td>

(30) Priorität: **31.10.77 GB 4517577**

(43) Veröffentlichungstag der Anmeldung:
**16.05.79 Patentblatt 79/10**

(45) Bekanntmachung des Hinweises auf die Patenterteilung:
**29.07.81 Patentblatt 81/30**

(84) Benannte Vertragsstaaten:
**BE DE FR GB NL**

(56) Entgegenhaltungen:
**GB - A - 1 236 373**
**GB - A - 1 280 730**
**GB - A - 1 463 671**
**US - A - 3 810 964**
**US - A - 4 091 136**

</td><td>

(73) Patentinhaber: **HOECHST AKTIENGESELLSCHAFT KALLE, Patentabteilung Postfach 3540 D-6200 Wiesbaden 1 (DE)**

(72) Erfinder: **van Engelen, Gerardus Hendrikus Maria Moeselplein 18**
**NL-6006 HL Weert (NL)**
Erfinder: **van Utteren, Tom Edward Coops Puttendijk 11**
**NL-6026 VW Maarheeze (NL)**
Erfinder: **Vonken, Hubertus Anthonius Gerardus Oranjeplein 175**
**NL-6006 CW Weert (NL)**

</td></tr>
</table>

Courier Press, Leamington Spa, England.

Geschäumte Polyolefinfolie, Verfahren zu ihrer Herstellung und Wandbekleidung aus geschäumter Polyolefinfolie

Die Erfindung betrifft eine geschlossenporige geschäumte Polyolefinfolie, insbesondere eine Folie, die sich zur Herstellung einer Wandbekleidung, worunter auch eine Deckenbekleidung zu verstehen ist, einsetzen läßt. Die Erfindung bezieht sich ferner auf ein Verfahren zur Herstellung der Polyolefinfolie und auf eine Wandbekleidung aus geschäumter Polyolefinfolie.

Es ist wünschenswert, daß eine als Wandbekleidung verwendete Folie eine geringe Rohdichte hat, so daß sie leicht im Gewicht und einfach zu handhaben ist. Die Folie muß auch gut bedruckbar sein und eine gleichmäßige glatte Oberflächenbeschaffenheit aufweisen. Ferner soll sie abriebfest sein.

Aus der GB-PS 12 20 053 ist die Herstellung einer Wandbekleidung aus einer offenporigen geschäumten Folie aus Polyäthylen niedriger Dichte bekannt. Um gewisse Nachteile einer Wandbekleidung dieser Art auszuschalten, insbesondere in Bezug auf ihre Abriebfestigkeit, ist in der GB-PS 13 06 373 die Verwendung einer Mischung aus Polyäthylen niedriger und hoher Dichte in bestimmten Anteilen vorgeschlagen.

Bei einer Mischung aus Polyäthylen niedriger und hoher Dichte muß wegen des höheren Schmelzpunktes von Polyäthylen hoher Dichte die Temperatur zum einwandfreien Extrudieren höher sein als für Polyäthylen niedriger Dichte allein. Wir haben festgestellt, daß solche höheren Temperaturen bei der Verwendung von flüchtigen flüssigen oder gasförmigen Treibmitteln nachteiligerweise zu offenporigen Schäumen führen und außerdem eine verhältnismäßig große Treibmittelmenge erforderlich ist, wenn ein Schaum mit geringer Rohdichte erzielt werden soll.

Offenporige Schäume zeigen im Vergleich zu geschlossenporigen Schäumen im allgemeinen eine relativ schlechte Oberflächenbeschaffenheit. Es ist bisher nicht gelungen, aus Polyolefinmischungen mit mehr als 10 Gewichtsprozent Polyäthylen hoher Dichte unter Verwendung von flüchtigen flüssigen oder gasförmigen Treibmitteln geschäumte Folien mit geschlossenen Poren herzustellen.

Überraschenderweise haben wir nun gefunden, daß zufriedenstellende geschlossenporige geschäumte Folien, die zur Herstellung von Wandbekleidung geeignet sind, aus einer Mischung von Polyäthylen niedriger Dichte und einem polare Gruppen enthaltenden Äthylenpolymerisat hergestellt werden können.

In der GB-PS 13 76 151 wird die Herstellung von offenporigem geschäumtem Material aus einer Mischung von Polyäthylen niedriger Dichte und einem polare Gruppen enthaltenden Äthylenpolymerisat vorgeschlagen. Geschlossenporiges geschäumtes Material aus dieser Polymermischung wird nur in den Vergleichsbeispielen dieser Patentschrift beschrieben, wobei für dieses Material keine Anwendungsmöglichkeit angegeben wird. Demgegenüber haben wir gefunden, daß ein geschlossenporiges geschäumtes Material aus Polymermischungen mit einem geringeren Anteil an polaren Gruppen besonders vorteilhaft zur Herstellung von Wandbekleidung geeignet ist.

Gegenstand der Erfindung ist daher eine geschlossenporige geschäumte Folie aus einer Mischung von Polyäthylen niedriger Dichte, mindestens einem polare Gruppen enthaltendem Äthylenpolymerisat und gegebenenfalls einem kristallinen Olefinpolymerisat. Sie ist dadurch gekennzeichnet, daß die Mischung 0,025 bis 1 Gewichtsprozent dieser polaren Gruppen enthält.

Unter Polyäthylen niedriger Dichte sind Äthylenhomopolymerisate und Äthylenmischpolymerisate mit weniger als 20 Gewichtsprozent an anderen Olefinen zu verstehen, die eine Dichte von weniger als 0,934 g/cm³ haben. Äthylenhomopolymerisate werden bevorzugt.

Mit "polare Gruppen" sind an der Polymerenkette hängende Atome oder Nichtkohlenwasserstoffgruppen bezeichnet. Zu diesen Gruppen gehören z.B. Estergruppen und Carbonsäuregruppen, die neutralisiert sein können; geeignete polare Atome sind z.B. Halogene, wie Chlor. Das polare Gruppen enthaltende Äthylenpolymerisat kann durch chemische Behandlung (z.B. durch Chlorierung) von Polyäthylen oder durch Mischpolymerisation von Äthylen mit einem oder mehreren polare Gruppen enthaltenden Comonomeren hergestellt werden. Zu diesen Comonomeren zählen beispielsweise ungesättigte Carbonsäuren, wie Acryl- oder Methacrylsäure oder deren Alkylester, z.B. Alkylacrylate oder -methacrylate, insbesondere Methylacrylat, Methylmethacrylat, Äthylacrylat und Äthylmethacrylat; Vinylester von Carbonsäuren, z.B. Vinylacetat, und Vinylchlorid.

Ein weiteres Beispiel für ein polare Gruppen enthaltendes Äthylenpolymerisat ist ein Ionomer, wie es unter der Bezeichung "Surlyn A" (eingetragenes Warenzeichen) im Handel erhältlich ist.

Das Ionomer besteht im wesentlichen aus einem Olefincopolymerisat mit an der Polymerkette hängenden Carboxylgruppen, die teilweise oder ganz mit Kationen, wie $NH_4^+$, $Na^+$, $Zn^{++}$, $Mg^{++}$, neutralisiert sind. Zu diesen Copolymerisaten gehören die Copolymerisate von Äthylen mit Acrylsäure oder Methacrylsäure oder Äthylen mit Vinylacetat und Acrylsäure oder Methacrylsäure.

Das bevorzugte polare Gruppen enthaltende Äthylenpolymerisat ist ein Copolymerisat aus Äthylen und Vinylacetat.

Wenn das polare Gruppen enthaltende Äthylenpolymerisat ein Äthylencopolymerisat ist, macht die Menge der darin enthaltenden Comonomer-Einheiten vorzugsweise zwischen 1 und 60, insbesondere 4 bis 10 Gewichtsprozent des Copolymerisates aus. Die Äthylencopolymerisate haben vorzugsweise eine Dichte im Bereich von 0,91 bis 0,95 g/cm³.

Der Mischung wird soviel polare Gruppen enthaltendes Äthylenpolymerisat zugesetzt, daß sie 0,025 bis 1, vorzugsweise 0,1 bis 0,7 Gewichtsprozent an polaren Gruppen enthält.

Das bedeutet, daß die eingesetzte Menge des polare Gruppen enthaltenden Äthylenpolymerisates von dem Anteil polarer Gruppen in dem Äthylenpolymerisat abhängig ist. Bevorzugt werden jedoch 0,1 bis 15, insbesondere 2,5 bis 7,5 Gewichtsprozent des polare Gruppen enthaltenden Äthylenpolymerisats verwendet.

Der Gehalt an polaren Gruppen wird beispielsweise durch IR-spektroskopische Analyse festgestellt. Um z.B. den Estergehalt zu ermitteln, wird der Absorptionsgrad einer C=O-Bindung gemessen und anschließend anhand einer zuvor erstellten Eichkurve für den Estergehalt z.B. der Methylmethacrylat-, Äthylacrylatoder Vinylacetatgehalt des Copolymerisates bestimmt.

Ferner kann die Konzentration der Estergruppen durch Verseifung des Polymerisates, z.B. mit alkoholischer Kalilauge, und anschließendes Titrieren bestimmt werden.

Neben dem Polyäthylen niedriger Dichte und dem polare Gruppen enthaltenden Äthylenpolymerisat kann in der Mischung gegebenenfalls ein kristallines Olefinpolymerisat, wie z.B. ein Polyäthylen mit einer Dichte über 0,94 g/cm³ oder kristallines Polypropylen, enthalten sein. Falls ein derartiges kristallines Polymerisat vorhanden ist, so macht es vorzugsweise zwischen 1 und 10 Gewichtsprozent der Mischung aus, da größere Mengen dazu neigen, offenporige Schäume zu bilden.

Es empfiehlt sich, 1 bis 40 Gewichtsprozent eines Füllstoffes mit hoher Deckkraft in die Folie einzuarbeiten, damit diese opak wird. Vorzugsweise enthält die Folie 2 bis 20 Gewichtsprozent eines weißfärbenden Füllstoffes, wie z.B. Titandioxid, Zinksulfid und/oder Kreide.

Die Erfindung betrifft ferner ein Verfahren zur Herstellung einer geschlossenporigen geschäumten Folie aus einer Mischung aus Polyäthylen niedriger Dichte und mindestens einem polare Gruppen enthaltenden Äthylenpolymerisat und, gegebenenfalls einem kristallinen Olefinpolymerisat, wobei die Mischung 0,025 bis 1 Gewichtsprozent dieser polaren Gruppen enthält. Es ist dadurch gekennzeichnet, daß man die Polymermischung zum Schmelzen bringt, in die geschmolzene Polymermischung unter Bildung einer homogenen Mischung ein Treibmittel einspritzt und die homogene Mischung extrudiert. Das Treibmittel ist vorzugsweise eine Flüssigkeit, ein Gas oder eine Mischung von beiden mit einem Siedepunkt, der mindestens um 10°C unter der Extrusionstemperatur der Polymerenmischung liegt. Treibmittel sind z.B. Pentan, Hexan. Heptan, Octan, Methylpentan, Dimethylhexen, Petrolätherfraktionen und halogenierte Kohlenwasserstoffe, wie z.B. Tetrachlorkohlenstoff, Chloroform, Äthylendichlorid, Methylenchlorid und 1,1,2 - Trichlor - 1,2,2 - trifluoräthan. Bevorzugte Treibmittel sind Pentan, 1,1,2-Trichlor-1,2,2-trifluoräthan, Difluordichlormethan, Monofluortrichlormethan, Hexan, Petroläther (Siedepunkt 40—60 oder 60—80°C) und Methylenchlorid oder deren Mischungen. Das Treibmittel wird vorzugsweise in einer Menge von 1 bis 20 Gewichtsprozent, bezogen auf die polymere Mischung eingesetzt.

Die geschäumte Folie hat vorzugsweise eine Dichte von 30 bis 400, insbesondere 100 bis 250 kg/m³, gemessen nach DIN 53420.

Zur Herstellung geschäumter Folien einer Dichte von 100 bis 250, insbesondere 150 bis 225 kg/m³, ist die Konzentration des Treibmittels vorzugsweise 10 bis 15 Gewichtsprozent. Wird die Treibmittelkonzentration auf über 20% erhöht, so wird die Oberflächenbeschaffenheit unzulänglich, da eine offenporige Struktur entsteht. Vor dem Schmelzen werden der Polymerisatmischung an sich bekannte Keimbildungsmittel, wie z.B. eine Mischung aus Zitronen-säure und Natriumbicarbonat oder Talk, Siliciumdioxyd, Calciumsilikat oder Calciumcarbonat, beigemengt.

Die homogenisierte Polymerisatmischung wird vorzugsweise in einem Extruder geschmolzen, in welchem das Treibmittel zu der Polymerschmelze eingespritzt wird. Anschließend wird die homogene Mischung gewöhnlich bei einer Temperatur im Bereich von 90 und 170, vorzugsweise 100 und 120, insbesondere 105 bis 115°C, durch eine Ringoder Schlitzdüse, vorzugsweise durch eine Ringdüse extrudiert. Der Extrusionsdruck liegt im allgemeinen bei 40 bis 100 bar.

Man hat festgestellt, daß die beste Schaumstruktur bei möglichst kurzem Abstand zwischen Extruder und Atmosphäre erreicht wird. Aus diesem Grund wird mit kurzer Bügellänge gearbeitet.

Bei Verwendung einer Ringdüse wird der extrudierte Schlauch aufgeblasen und anschließend flachgelegt und zu einer Flachfolie geschnitten, die dann abgezogen, gegebenenfalls einer Coronaentladungsbehandlung unterzogen und aufgewickelt wird.

Die Folie hat vorzugsweise eine Dicke von 0,2 bis 1 mm, insbesondere 0,3 bis 0,6 mm.

Die geschlossenen Poren der geschäumten Folie haben vorzugsweise einen durchschnittlichen Durchmesser von 0,05 bis 1 mm, insbesondere 0,3 bis 0,8 mm.

Im Vergleich zu den aus Mischungen von Polyäthylen niedriger und hoher Dichte hergestellten offenporigen geschäumten Folien. haben die geschäumten Folien der Erfindung eine feinere Porenstruktur und eine glattere Oberfläche. Dadurch erhält die Folie bessere Eigenschaften für das Bedrucken, so daß auch feine Details gleichbleibend gut aufgedruckt werden können. Die Folien haben ferner eine gute Haltbarkeit, d.h. sie sind abriebfest, formbeständig und leicht im Gewicht, jedoch fest genug, um sich ohne zu reißen an Wänden und Decken anbringen zu lassen. Trotz ihrer Festigkeit lassen sie sich etwas strecken und passen sich so Unebenheiten, z.B. Buckeln, in der Wand an. Andererseits sind die Folien auch kompakt genug, um kleinere Fehler, z.B. Risse, in der Wand zu verdecken. Da die Folie beim Anfeuchten nicht quillt, kann sie mit einem wasserhaltigen Tapetenkleister an die Wand angebracht werden, wobei entweder die Wand oder die Folie mit Kleister eingestrichen wird.

Ein weiterer Vorteil der erfindungsgemäßen Folie besteht darin, daß zur Herstellung einer Folie mit geringer Rohdichte weniger Treibmittel benötigt wird als bei den offenporigen Schäumen aus Mischungen von Polyäthylen niedriger und hoher Dichte. Zur Erzielung einer guten Haftung eines Druckmusters auf der Folie wird die zu bedruckende Folienoberfläche einer geeigneten physikalischen oder chemischen Oberflächenbehandlung unterzogen, vorzugsweise einer Coronaentladungsbehandlung, die in "Plastics and Polymers", April 1969, beschrieben ist. Durch die Coronabehandlung wird die Oberflächenspannung der Folie erhöht. Die Oberflächenspannung an der zu bedruckenden Oberfläche liegt vorzugsweise über 35, insbesondere zwischen 40 und 55 mN/m, gemessen nach der folgenden Benetzungsmethode.

Bei dieser Prüfmethode werden Mischungen aus Formamid und Äthylenglykolmonoäthyläther mit bestimmten, von der mengenmäßigen Zusammensetzung dieser Mischungen abhängigen Oberflächenspannungen verwendet. Ein mit einem Pinsel auf die geschäumte Folie aufgetragener Flüssigkeitsfilm darf sich nicht in weniger als 2 Sekunden zu Tropfen zusammenziehen. Bleibt der Flüssigkeitsfilm länger als 2 Sekunden zusammenhängend, wird die Mischung mit der nächsthöheren Oberflächenspannung aufgetragen; zieht sich der Flüssigkeitsfilm dagegen in weniger als 2 Sekunden zu Tropfen zusammen, wird die Prüfung mit der Mischung mit der nächstniedrigeren Oberflächenspannung wiederholt. Wenn der Flüssigkeitsfilm genau 2 Sekunden zusammenhängend bleibt, entspricht die Oberflächenspannung der Mischung der Oberflächenspannung der geschäumten Folie.

An die Folie wird u.a. die Anforderung gestellt, daß sie mit einem herkömmlichen Tapetenkleister an der Wand angebracht werden kann und über diesen Kleister ausreichend gut an der Wand haftet. Andererseits ist eine allzu feste Haftung nicht erwünscht, damit die Folie gegebenenfalls leicht wieder von der Wand abgezogen werden kann. Aus diesem Grund kann die Oberflächenspannung an der Rückseite, d.h. an der Folienseite, die an der Wand befestigt werden soll, geringer sein als an der Vorderseite; vorzugsweise hat sie eine Größe von 30 bis 40, insbesondere 32 bis 35 mN/m.

Die zur Verbesserung der Haftung des Druckmusters durchgeführte Coronaentladungsbehandlung der Folienvorderseite kann zwar auch die Haftfähigkeit der Rückseite etwas erhöhen, es kann aber auch eine Coronabehandlung der Rückseite erwünscht sein, die dann allerdings in geringerem Maße als die Behandlung der Vorderseite durchgeführt wird. Die Coronabehandlung erfolgt beispielsweise in Extrusionsrichtung nach dem Flachlegen der Folie, aber vor dem Aufwickeln.

Für die Verwendung als Wandbekleidung kann die Folienvorderseite mit einem Muster bedruckt werden. Ein derartiges Muster kann nach herkömmlichen Drucktechniken aufgebracht werden, z.B. im Reliefdruck-, Flexodruck-, Tiefdruck-, Siebdruck- oder Umdruckverfahren. Geeignete Druckfarben sind u.a. Polyamidfarben. Vor dem Bedrucken kann zur Verbesserung der Opazität und zur Herabsetzung des Folienglanzes gegebenenfalls eine deckende Schicht mit einer weißen oder farbigen Druckfarbe aufgetragen werden. Ferner kann die Folie vor, gleichzeitig mit oder nach dem Bedrucken oder Beschichten mit einer Prägung versehen werden.

Zum Prägen kann die Folie durch einen Durchgangsspalt zwischen einer Metallwalze mit erhabenen Prägemuster und einer Stützwalze mit entsprechendem vertieftem Prägemuster hindurchgeführt werden. Die Stützwalze besteht zweckmäßigerweise aus Papier, in das das vertiefte Prägemuster durch rollenden Kontakt mit der Metallwalze eingepreßt wurde. Alternativ kann die Stützwalze auch aus Metall mit eingraviertem vertieftem Prägemuster bestehen. Die Folie kann vor dem Prägen erwärmt und mit einer kalten Prägewalze geprägt werden. Ein solches Erwärmen schwächt jedoch die Folie und kann eine Streckung hervorrufen. Dadurch können sich Probleme in Bezug auf die Paßgenauigkeit eines vor oder nach dem Prägen aufgebrachten Druckmusters ergeben. Vorzugsweise wird daher die nicht oder nur gering erwärmte Folie mit einer erwärmten Walze geprägt.

Es ist auch möglich, ein Muster in die Folie einzuprägen, indem man sie zwischen einer Prägewalze und einer glatten unelastischen Walze hindurchführt. Hierbei wird eine Folienoberfläche unter Zusammenpressen der Schaumstruktur geprägt, während die andere Oberfläche glatt bzw. ungeprägt bleibt. Bei diesem Verfahren wird die Folie oder die Prägewalze, vorzugsweise jedoch die Prägewalze, erwärmt.

In einem weiteren Verfahren kann durch Aufdrucken einer schäumbaren, anschließend zum Schäumen gebrachten Masse eine Reliefstruktur der Folie erzielt werden. Selbstverständlich soll eine solche schäumbare Masse bei relativ niedriger Temperatur schäumen, so daß die Folie dabei nicht bis zur Zerstörung ihrer Schaumstruktur erwärmt wird.

Wenn die Folie mit einem Prägemuster versehen wird, kann sie auch ohne Bedruckung als Wandbekleidung verwendet werden. Allerdings ist es auch in diesem Fall zur Erhöhung der Undurchsichtigkeit und zur Herabsetzung des Glanzes wünschenswert, vor dem Prägen eine deckende Schicht auf die Folie aufzutragen.

Die geschäumte Folie kann auch als Untertapete genommen werden, wobei sie dann weder geprägt noch bedruckt zu werden braucht. Doch auch wenn sie als Untertapete dienen soll, ist eine Coronaentladungsbehandlung vorteilhaft. Die Untertapete wird vorzugsweise mit ihrer stärker behandelten Oberfläche an der Wand befestigt. Auf diese Weise kann eine weitere Wandbekleidung, z.B. eine Tapete, über die Untertapete geklebt werden. Der Unterschied in der Haftung zwischen der Tapete und der Untertapete einerseits und zwischen der Untertapete und der Wand andererseits ermöglicht ein leichtes Abziehen der Tapete von der Untertapete, die ihrerseits fest an der Wand haften bleibt.

Falls erwünscht, kann die Folie mit geeigneten Klebern beispielsweise auf Papier, Stoffbahnen oder Kunststofffolien, wie metallisierter Polyesterfolie, aufkaschiert werden, so daß man eine Vielzahl dekorativer Wirkungen erzielen kann.

Ferner kann ein Kelbstoff auf die Folienrückseite aufgetragen werden, mit dem sich die Folie an der Wand befestigen läßt. Ein solcher Kleber kann ein durch Wasser aktivierbarer Klebstoff, z.B. Stärkekleber, oder ein Kontaktkleber sein. Im letztgenannten Fall werden vorzugsweise Maßnahmen getroffen, durch die die Folie auf der Wandfläche in die richtige Lage gebracht werden kann, bevor der Kontaktkleber mit der Wand in Berührung kommt. Eine solche Maßnahme ist u.a. das Aufkaschieren eines netzartigen Materials auf die Folie, wie z.B. in der GB-PS 13 98 401 beschrieben, oder das Einbringen elastischer Partikel in die Kleberschicht gemäß US-PS 35 92 722 oder GB-PS 14 93 407.

In den folgenden Beispielen wird die erfindung näher erläutert, sie soll jedoch nicht auf den Inhalt der Beispiele beschränkt sein.

Der Schmelzindex der Polymerisate wurde nach ASTM-D 1238 gemessen.

### Beispiel 1

Eine 550 mm breite geschäumte Folie gemäß der Erfindung wurde aus einer Mischung von 83 Gewichtsprozent eines Äthylenhomopolymerisats niedriger Dichte (Dichte 0,921 g/cm³, Schmelzindex 0,6 g/10 min), 7 Gewichtsprozent eines Äthylen - Vinylacetat-Copolymerisats (Dichte 0,926 g/cm³, Schmelzindex 1,4 g/10 min), das 5,5 Gewichtsprozent der Acetatgruppe enthält, und 10 Gewichtsprozent Titandioxyd hergestellt.

Dieser Polymermischung wurde eine stöchiometrische Mischung aus Zitronensäure und Natriumbicarbonat zugesetzt. Die Polymermischung wurde in einer Mischtrommel homogenisiert und anschließend in einem Extruder erhitzt und geschmolzen. Als Treibmittel wurde eine Mischung aus 1,1,2-Trichlor-1,2,2-trifluoräthan und Monofluortrichlormethan in einer Menge von 15 Gewichtsprozent der Polymermischung hinzugefügt. Die Polymermischung wurde dann bei einer Temperatur von 111°C und einem Druck von 45 bar durch eine Ringdüse mit 180 mm Durchmesser und 0,35 mm Spaltweite extrudiert. Der extrudierte Schlauch hatte einen Durchmesser von 450 mm. Er wurde flachgelegt und zu einer Flachfolie geschnitten, die dann abgezogen, einer Coronabehandlung unterzogen und aufgewickelt wurde.

Zur Coronabehandlung wurde die Folie weiter in Extrusionsrichtung über eine gummiummantelte Metallwalze geführt. Im Abstand von 1,5 mm von der Walzenoberfläche war ein Elektrodensystem angeordnet, an das ein Hochfrequenzpotential von etwa 10.000 V angelegt wurde.

Die Folie hatte eine Dichte von 210 kg/m³, ein Flächengewicht von 83 g/m² und eine durchschnittliche Dicke von 0,38 mm. Sie wies etwa 270 Poren pro Quadratzentimeter Oberfläche auf, und die größte Abmessung der Poren betrug durchschnittlich etwa 0.7 mm.

Die Reißfestigkeit der Folie in Maschinenrichtung betrug 680 mN (gemessen nach ASTM-D 689-44). Bei der Prüfung in Querrichtung riß die Folie auf einer Linie senkrecht zu dem auslösenden Schnitt, so daß kein gültiger Wert für die Reißfestigkeit in Querrichtung angegeben werden kann.

Um die Dehnung der Folie unter Belastung zu messen, wurden die Enden einer 250 mm langen und 60 mm breiten Probe zwischen einer feststehenden und einer beweglichen Einspannvorrichtung eingespannt. Die freie Probenlänge betrug 127 mm. Die Probe wurde belastet und ihre Dehnung gemessen; die Belastung bei einer 5 prozentigen Dehnung wurde mit 0,96 MN/m² berechnet.

Nach der Coronabehandlung wies die Folienvorderseite eine Oberflächenspannung von 48 bis 52 mN/m auf, während an der Rückseite 32 bis 34 mN/m (Benetzungsverfahren) gemessen wurden.

Die Wasserdampfdurchlässigkeit (gemessen nach DIN 53122) betrug 3,5 g/m² d.

Eine Folienprobe wurde vier Tage bei 50°C aufbewahrt und die Abmessungsänderungen festgestellt. Die Länge verminderte sich um 1%, während die Breite um 1% zunahm.

Anschließend wurde im Tiefdruckverfahren eine weißpigmentierte Druckfarbe auf Polyamidbasis als deckende Schicht auf die Folienvorderseite aufgetragen. Das Trockengewicht der Schicht betrug etwa 5 g/m².

Danach wurde ein dreifarbiges Blumenmuster mit Farben auf Polyamidbasis bei einer Geschwindigkeit von 2,5 m/s im Tiefdruckverfahren auf die beschichtete Folie aufgedruckt. Die Wandbekleidung wurde dann auf eine Breite von 523 mm zugeschnitten.

Die Scheuerbeständigkeit des Aufdruckes wurde nach dem britischen Normenentwurf 1248 geprüft. Bei dieser Prüfmethode wird ein Scheuerpulver mit Seifenlösung angefeuchtet und auf eine Probe der Wandbekleidung aufgebracht. Die so behandelte Probe wird dann mit einer hin- und herfahrenden, auf eine Auflast von 600 g beschwerten Bürste mit Nylonbürsten geschrubbt. Erst nach 38 Hin- und Herbewegungen der Bürste zeigte das aufgedrückte Muster Anzeichen einer Beschädigung.

Die bedruckte, zugeschnittene Wandbekleidung wurde mit ®"Polycell Heavy Duty"-Tapetenkleister (einem Kleister auf Basis einer Mischung von Stärke und Celluloseäther), der auf die Wand und nicht auf die Folie aufgetragen wurde, auf eine mit Emulsionsfarbe gestrichene verputzte Wand geklebt. Die Folie ließ sich ohne Anzeichen von Fehlern leicht verkleben.

Nach einer Woche konnte die Wandbekleidung sauber von der Wand abgezogen werden, wobei eine senkrechte Abziehkraft von etwa 60 g pro cm Breite der Wandbekleidung aufgewandt werden mußte.

### Beispiel 2a

Eine Mischung aus 88 Gewichtsprozent eines Äthylenhomopolymerisates niedriger Dichte (Dichte 0,923 g/cm³, Schmelzindex 0,6 g/10 min), 2 Gewichtsprozent eines 5,5 Gewichtsprozent Acetatgruppen enthaltenden Äthylen-Vinylacetat-Copolymerisats (Dichte 0,926 g/cm³, Schmelzindex 1,4 g/10 min), 10 Gewichtsprozent Titandioxyd und eine stöchiometrische Mischung aus Zitronensäure und Natriumbicarbonat wurden homogenisiert, erhitzt und geschmolzen. Bezogen auf auf das Gewicht der Polymermischung wurden 16 Gewichtsprozent 1,1,2-Trichlor-1,2,2-trifluoräthan als Treibmittel zugesetzt. Die Polymermischung wurde wie in Beispiel beschrieben extrudiert. Die Extrusionstemperatur betrug 115°C und der Druck 62 bar. Der extrudierte Schlauch hatte eine Wanddicke von 0,37 mm und ein Flächengewicht von 96 g/m². Im Vergleich zu der nach Beispiel 3 hergestellten Folie hatte die Folie nach Beispiel 2 a zwar eine glattere Oberfläche, ihre Bedruckbarkeit war jedoch noch nicht zufriedenstellend.

### Beispiel 2b

Aus einer Mischung von 85 Gewichtsprozent des Äthylenhomopolymerisates aus Beispiel 2a, 5 Gewichtsprozent des Äthylen-Vinylacetat-Copolymerisats aus Beispiel 2a und 10 Gewichtsprozent Titandioxyd wurde gemäß Beispiel 2a eine geschäumte Folie mit geschlossenen Poren hergestellt. Die Folie hatte eine feinere Porenstruktur und eine glattere Oberfläche als die Folie aus Beispiel 2a.

### Beispiel 2c

Aus einer Mischung von 80 Gewichtsprozent des Äthylenhomopolymerisats aus Beispiel 2a, 5 Gewichtsprozent des Äthylen-Vinylacetat-Copolymerisats aus Beispiel 2a, 5 Gewichtsprozent "Surlyn A" (eingetragenes Warenzeichen) mit 7,4 Gewichtsprozent an polaren Gruppen, einer Dichte von 0,94 g/cm³ und einem Schmelzindex von 3,6 g/10 min und 10 Gewichtsprozent Titandioxyd wurde gemäß Beispiel 2a eine geschäumte Folie mit geschlossenen Poren hergestellt. Die Extrusionstemperatur betrug 111°C und der Druck 54 bar. Der extrudierte Schlauch hatte eine Wanddicke von 0,28 mm und ein Flächengewicht von 100 g/m². Die Folie wies eine feine Porenstruktur, eine glatte Oberfläche und eine gute Bedruckbarkeit auf.

### Beispiel 3

Zu Vergleichszwecken wurde für die Herstellung einer geschlossenporigen geschäumten Folie nach dem Stand der Technik eine Mischung aus 90 Gewichtsprozent des Äthylenhomopolymerisats nach Beispiel 2a und 10 Gewichtsprozent Titandioxyd genommen.

Dieser homogenisierten Mischung wurde eine stöchiometrische Mischung aus Zitronensäure und Natriumbicarbonat zugesetzt. Nach dem Schmelzen der Mischung wurde als Treibmittel eine Mischung aus Trichlormonofluormethan und Dichlordifluormethan in einer Menge von 10 Gewichtsprozent, bezogen auf die geschmolzene Mischung, hinzugefügt. Die geschmolzene Mischung wurde wie in Beispiel 1 beschrieben extrudiert. Die Extrusionstemperatur betrug 115°C und der Druck 62 bar. Der extrudierte Schlauch hatte eine Wanddicke von 0,35 mm und ein Flächengewicht von 100 g/m². Die Schmelzfestigkeit der Mischung war zu niedrig.

Die kennzeichnenden Merkmale der nach den Beispielen 2a, 2b, 2c und 3 hergestellten Folien sind in der folgenden Tabelle aufgeführt.

TABELLE

| | Meßwert in | Meßmethode | 2a | 2b | 2c | 3 |
|---|---|---|---|---|---|---|
| Dicke | mm | | 0,37 | 0,34 | 0,28 | 0,35 |
| Flächengewicht | g /m² | | 96 | 86 | 100 | 100 |
| Dichte | kg /m³ | DIN 53420 | 259 | 252 | 357 | 286 |
| Anzahl der Poren | je cm² | | 215 | 240 | 280 | 125 |
| Wasserdampfdurch-lässigkeit | g /m² d | DIN 53122 | 3,1 | 3,3 | 3,7 | 3,5 |
| Bruchdehnung | | | | | | |
| längs | % | DIN 53455 | 57 | 74 | 84 | 45 |
| quer | % | ,, | 49 | 55 | 65 | 41 |
| Zugfestigkeit | | | | | | |
| längs | MN /m² | DIN 53455 | 3,6 | 3,6 | 4,0 | 3,7 |
| quer | MN /m² | ,, | 1,7 | 1,8 | 1,9 | 1,8 |
| Elastizitätsmodul | | | | | | |
| längs | MN /m² | DIN 53455 | 39 | 41 | 41 | 42 |
| quer | MN /m² | ,, | 25 | 26 | 26 | 28 |
| Weiterreißfestigkeit | | | | | | |
| längs | mN | ASTM—D 689—44 | 610 | 630 | 800 | 580 |
| quer | mN | ,, | nacht meßbar | | | 1710 |

## Patentansprüche

1. Geschlossenporige geschäumte Folie aus einer Mischung von Polyäthylen niedriger Dichte, mindestens einem polaren Gruppen enthaltenden Äthylenpolymerisat und gegebenenfalls einem kristallinen Olefinpolymerisat, dadurch gekennzeichnet, daß die Mischung 0,025 bis 1 Gewichtsprozent dieser polaren Gruppen enthält.

2. Gewchäumte Folie nach Anspruch 1, dadurch gekennzeichnet, daß die genannte Mischung 0,1 bis 0,7 Gewichtsprozent der polaren Gruppen enthält.

3. Geschäumte Folie nach Anspruch 1 oder 2, dadurch gekennzeichnet, daß die Mischung 0,1 bis 15 Gewichtsprozent des polare Gruppen enthaltenden Äthylenpolymerisats enthält.

4. Geschäumte Folie nach einem der Ansprüche 1 bis 3, dadurch gekennzeichnet, daß das polare Gruppen enthaltende Äthylenpolymerisat ein Copolymerisat aus Äthylen und einem oder mehreren polare Gruppen enthaltenden Comonomeren ist.

5. Geschäumte Folie nach Anspruch 4, dadurch gekennzeichnet, daß das polare Gruppen enthaltende Äthylenpolymerisat eine Dichte im Bereich von 0,91 bis 0,95 g/cm³ hat.

6. Geschäumte Folie nach Anspruch 5, dadurch gekennzeichnet, daß das Äthylencopolymerisat 1 bis 60 Gewichtsprozent Comonomer-Einheiten enthält.

7. Geschäumte Folie nach Anspruch 6, dadurch gekennzeichnet, daß das Äthylencopolymerisat ein Copolymerisat aus Äthylen und Vinylacetat ist.

8. Geschäumte Folie nach einem der Ansprüche 1 bis 7, dadurch gekennzeichnet, daß das Polyäthylen niedriger Dichte ein Homopolymerisat ist.

9. Geschäumte Folie nach einem der Ansprüche 1 bis 8, dadurch gekennzeichnet, daß das polare Gruppen enthaltende Äthylenpolymerisat ein Ionomer ist.

10. Geschäumte Folie nach einem der Ansprüche 1 bis 9, dadurch gekennzeichnet, daß mindestens eine Oberfläche der Folie einer die Haftungseigenschaften der Oberfläche verbessernden Behandlung unterzogen worden ist.

11. Geschäumte Folie nach einem der Ansprüche 1 bis 10, dadurch gekennzeichnet, daß die geschlossenen Poren einen durchschnittlichen Durchmesser von 0,05 bis 1 mm aufweisen.

12. Geschäumte Folie nach einem der Ansprüche 1 bis 11, dadurch gekennzeichnet, daß die Dichte 30 bis 400 kg/m³ beträgt.

13. Geschäumte Folie nach einem der Ansprüche 1 bis 12, dadurch gekennzeichnet, daß die Folie 1 bis 40 Gewichtsprozent eines Füllstoffes enthält.

14. Wand- oder Deckenbekleidung bestehend aus einer geschäumten Folie nach einem der Ansprüche 1 bis 13.

15. Wand- oder Deckenbekleidung nach Anspruch 14, dadurch gekennzeichnet, daß die Folienoberfläche mit einer Prägung versehen ist.

16. Wand- oder Deckenbekleidung nach Anspruch 14 oder 15, dadurch gekennzeichnet, daß auf eine Oberfläche der Folie ein Kleber aufgebracht ist.

17. Wand- oder Deckenbekleidung nach einem der Ansprüche 14 bis 16, dadurch gekennzeichnet, daß auf eine Oberfläche ein Muster aufgedruckt ist.

18. Verfahren zur Herstellung einer geschäumten Folie nach einem der Ansprüche 1 bis 13, dadurch gekennzeichnet, daß man die Polymermischung zum Schmelzen bringt, in die geschmolzene Polymermischung unter Bildung einer homogenen Mischung ein Treibmittel einspritzt und die homogene Mischung extrudiert.

19. Verfahren nach Anspruch 18, dadurch gekennzeichnet, daß das Treibmittel eine Flüssigkeit, ein Gas oder eine Mischung von beiden mit mindestens um 10°C unter der Extrusionstemperatur der Polymermischung liegenden Siedepunkt ist und in einer Menge von 1 bis 20 Gewichtsprozent, bezogen auf die Polymermischung, eingesetzt wird.

## Claims

1. A closed-cell foamed film formed from a mixture of low-density polyethylene; at least one ethylene polymer containing polar groups; and, optionally, a crystalline olefin polymer, characterized in that the mixture contains between 0.025 and 1 percent by weight of said polar groups.

2. A foamed film as claimed in claim 1, characterized in that the mixture contains between 0.1 and 0.7 percent by weight of the polar groups.

3. A foamed film as claimed in claim 1 or 2, characterized in that the mixture contains between 0.1 and 15 percent by weight of said ethylene polymer containing polar groups.

4. A foamed film as claimed in any of claims 1 through 3, characterized in that the ethylene polymer containing polar groups is a copolymer of ethylene and one or several comonomers containing polar groups.

5. A foamed film as claimed in claim 4, characterized in that the density of the ethylene polymer containing polar groups is in a range between 0.91 and 0.95 g/cm³.

6. A foamed film as claimed in claim 5, characterized in that the ethylene copolymer contains between 1 and 60 percent by weight of comonomer units.

7. A foamed film as claimed in claim 6, characterized in that the ethylene copolymer is a copolymer of ethylene and vinyl acetate.

8. A foamed film as claimed in any of claims 1 through 7, characterized in that the low-density polyethylene is a homopolymer.

9. A foamed film as claimed in any of claims 1 through 8, characterized in that the ethylene polymer containing polar groups is a ionomer.

10. A foamed film as claimed in any of claims 1 through 9, characterized in that at least one surface of the film has been subjected to a treatment improving the bonding properties of the surface.

11. A foamed film as claimed in any of claims 1 through 10, characterized in that the closed cells have average diameters of between 0.05 and 1 mm.

12. A foamed film as claimed in any of claims 1 through 11, characterized in that the density varies between 30 and 400 kg/m³.

13. A foamed film as claimed in any of claims 1 through 12, characterized in that the film contains between 1 and 40 percent by weight of a filler.

14. A wall covering or a ceiling covering consisting of a foamed film as claimed in any of claims 1 through 13.

15. A wall covering or a ceiling covering as claimed in claim 14, characterized in that the film has an embossed surface.

16. A wall covering or a ceiling covering as claimed in claim 14 or claim 15, characterized in that an adhesive has been applied to one surface of the film.

17. A wall covering or a ceiling covering as claimed in any of claim 14 through 16, characterized in that a printed pattern is present on one film surface.

18. A process for the manufacture of a foamed film as claimed in any of claims 1 through 13, characterized in that the polymer mixture is melted, an expanding agent is injected into the molten polymer mixture, in a way such that a homogeneous mixture is obtained, and in that the homogeneous mixture obtained is extruded.

19. A process as claimed in claim 18, characterized in that the expanding agent is a liquid, a gas or a mixture of the two having a boiling point which lies at least 10°C below the extrusion temperature of the polymer mixture, and being employed in a quantity varying between 1 and 20 percent by weight relative to the weight of the polymer mixture.

## Revendications

1. Feuille de mousse à alvéoles fermées obtenues à partir d'un mélange de polyéthylène à faible densité, d'au moins un produit de polymérisation d'éthylène renfermant des groupes polaires et éventuellement d'un produit de polymérisation cristallin d'une oléfin, caractérisée en ce que le mélange a une teneur comprise entre 0,025 et 1% en poids de groupes polaires.

2. Feuille de mousse selon la revendication 1, caractérisée en ce que ledit mélange a une teneur en groupes polaires comprise entre 0,1 et 0,7% en poids.

3. Feuille de mousse selon la revendication 1 ou 2, caractérisée en ce que le mélange a une teneur en produit de polymérisation d'éthylène renfermant des groupes polaires comprise entre 0,1 et 15% en poids.

4. Feuille de mousse selon l'une quelconque des revendications 1 à 3, caractérisée en ce que le produit de polymérisation d'éthylène renfermant des groupes polaires est un copolymère d'éthylène et d'un ou plusieurs monomères renfermant des groupes polaires.

5. Feuille de mousse selon la revendication 4, caractérisée en ce que le produit de polymérisation d'éthylène renfermant des groupes polaires présente une densité comprise entre 0,91 et 0,95 g/cm³.

6. Feuille de mousse selon la revendication 5, caractérisée en ce que le produit de copolymérisation d'éthylène renferme de 1 à 60% en poids de motifs élémentaires de monomère.

7. Feuille de mousse selon la revendication 6, caractérisée en ce que le produit de copolymérisation d'éthylène est un copolymère d'éthylène et d'acétate de vinyle.

8. Feuille de mousse selon l'une quelconque des revendications 1 à 7, caractérisée en ce que le polyéthylène de faible densité est un produit d'homopolymérisation.

9. Feuille de mousse selon l'une quelconque des revendications 1 à 8, caractérisée en ce que le produit de polymérisation d'éthylène renfermant des groupes polaires, est un ionomère.

10. Feuille de mousse selon l'une quelconque des revendications 1 à 9, caractérisée en ce qu'au moins une face de la feuille a reçu un traitement améliorant les propriétés adhésives de la surface.

11. Feuille de mousse selon l'une quelconque des revendications 1 à 10, caractérisée en ce que les alvéoles fermées présentent un diamètre moyen compris entre 0,05 et 1 mm.

12. Feuille de mousse selon l'une quelconque des revendications 1 à 11, caractérisée en ce que sa densité est comprise entre 30 et 400 kg/m³.

13. Feuille de mousse selon l'une quelconque des revendications 1 à 12, caractérisée en ce que la feuille a une teneur en matière de charge comprise entre 1 et 40% en poids.

14. Revêtement de mur ou de plafond qui consiste en une feuille de mousse selon l'une quelconque des revendications 1 à 13.

15. Revêtement de mur ou de plafond selon la revendication 14, caractérisée en ce que la surface de la feuille comporte des motifs estampés.

16. Revêtement de mur ou de plafond selon la revendication 14 ou 15, caractérisé en ce que sur une face il est pourvu d'un adhésif.

17. Revêtement de mur ou de plafond, selon l'une quelconque des revendications 14 à 16, caractérisé en ce qu'une face comporte un motif imprimé.

18. Procédé pour la fabrication d'une feuille de mousse selon l'une quelconque des revendications 1 à 13, caractérisé en ce que l'on fait fondre le mélange de polymères, on injecte un agent gonflant dans ce mélange de polymères fondu en l'homogénéisant et on soumet ce mélange homogène à une extrusion.

19. Procédé selon la revendication 18, caractérisé en ce que l'agent gonflant est un liquide, un gaz ou un mélange des deux, ayant un point d'ébullition d'au moins 10°C inférieur à la température d'extrusion du mélange de polymères que l'on met en oeuvre en une quantité comprise entre 1 et 20% en poids par rapport au mélange de polymères.